# FASCICULE DE BREVET EUROPEEN

(11) **EP 2 615 149 B1**
(45) Date de publication et mention de la délivrance du brevet: **02.09.2015**
(21) Numéro de dépôt: 13150394.8
(22) Date de dépôt: 07.01.2013
(51) Int. Cl.: C08K 3/00, C08K 3/34, C09K 3/10, C08K 5/548, G04B 37/08

(54) **JOINT ET PROCÉDÉ DE FABRICATION D'UN TEL JOINT**
FUGENDICHTUNG UND HERSTELLUNGSVERFAHREN EINER SOLCHEN DICHTUNG
JOINT AND METHOD FOR MANUFACTURING SUCH A JOINT

(30) Priorité: 10.01.2012 CH 412012
(43) Date de publication de la demande: 17.07.2013
(73) Titulaire: BIWI S.A., 2855 Glovelier (CH)
(72) Inventeur: Bourquard, Pascal, 2854 Bassecourt (CH)
(74) Mandataire: GLN SA

(56) Documents cités:
- EP-A1- 0 795 580
- EP-A1- 1 279 872
- EP-A1- 2 267 071
- EP-A1- 2 469 359
- WO-A1-99/31176
- US-A- 6 129 360

## Description

### Domaine technique

La présente invention se rapporte aux joints susceptibles d'être utilisés notamment dans des pièces d'horlogerie, en tant que garniture d'étanchéité. La présente invention concerne plus spécifiquement les joints à faible perméabilité aux gaz, tels que l'hélium ou l'hydrogène, et susceptibles d'être utilisés notamment dans une pièce d'horlogerie. L'invention concerne également des pièces d'horlogerie comprenant de tels joints.

### Etat de la technique

Dans le domaine de l'horlogerie, les joints sont en général utilisés pour assurer l'étanchéité entre deux pièces mobiles, par exemple couronne de remontoir et tube de couronne, ou entre deux pièces fixes, par exemple fond et carrure.

De tels joints peuvent être toriques, plats ou de forme. Ils sont généralement réalisés en matières plastiques, silicone ou caoutchouc.

De nombreux exemples de joints fabriqués à partir d'un composite de caoutchouc sont connus :

Le document EP 2 267 071 décrit un joint utilisé pour des applications électriques et fabriqué à partir d'un composite de caoutchouc présentant une forte résistance aux acides et à la chaleur et pouvant être utilisé dans des conditions de pressions et températures élevées.

Le document EP 1 279 872 porte sur des joints d'étanchéité, en particulier pour montre bracelet, dont la composition lui procure une longue durée de vie. Ledit joint utilise un caoutchouc butyle réticulé pour obtenir l'étanchéité à l'eau et à l'humidité.

Le document EP 0 795 580 dévoile des compositions particulières de caoutchouc pour réaliser des joints d'étanchéité présentant des performances thermiques élevées.

Le document US 6 129 360 divulgue une composition pour un joint automobile silicone résistant aux hydrocarbures.

Le document WO 9931176 décrit un joint polymère présentant une forte perméabilité à l'oxygène, une faible dureté et un bon retour élastique.

Le document EP 2 469 359 propose un joint polymère pour l'horlogerie présentant une faible déformation rémanente sous contrainte et un allongement à la rupture élevé.

Dans le domaine de l'horlogerie, les joints doivent répondre à un cahier des charges spécifique tel que fluage faible, tribologie spécifique afin d'éviter l'utilisation de lubrifiant, et résistance aux huiles. En ce qui concerne plus spécifiquement les propriétés mécaniques, on recherche des joints présentant une déformation rémanente sous contrainte (DRC) la plus faible possible, tout en atteignant un module à 100% et un allongement à la rupture optimal adéquats.

Dans le cas plus spécifique des montres de plongée, les joints doivent être imperméables à l'hélium. En effet, pour effectuer des travaux en grande profondeur, on utilise une cloche dans laquelle s'installent des plongeurs professionnels. A l'intérieur de la cloche circulent des mélanges de gaz composés de fortes proportions d'hélium. La pression est progressivement augmentée pour atteindre celle régnant à la profondeur de travail. Le plongeur, toujours à l'intérieur de la cloche, est ensuite descendu jusqu'au site d'intervention. Les molécules d'hélium sont si petites qu'elles diffusent alors à travers tous les matériaux des joints et pénètrent à l'intérieur de la montre. Lorsque les travaux sont terminés, le plongeur regagne la cloche qu'on remonte à la surface. C'est alors que s'effectue le retour à la pression atmosphérique. Cette décompression progressive est bien sûr assez lente mais parfois plus rapide que le dégazage de l'hélium contenu dans la montre. Dès lors, la montre va se retrouver surcompression et elle va généralement perdre son verre qui n'est pas conçu pour recevoir une pression interne.

A l'inverse, on peut remplir certaines pièces d'horlogerie de gaz tels que l'hélium ou l'hydrogène ou faire le vide pour répondre à certains objectifs techniques. Des joints étanches à ces gaz sont nécessaires pour contenir les gaz à l'intérieur de la pièce d'horlogerie.

Les joints utilisés à l'heure actuelle ne permettent pas de répondre à ces cahiers des charges spécifiques. Plus particulièrement, ils ne présentent pas les propriétés mécaniques favorables à l'étanchéité ou à une faible perméabilité aux gaz tels que l'hélium ou l'hydrogène.

Un but de la présente invention est donc de pallier cet inconvénient, en proposant de nouveaux joints présentant une faible perméabilité aux gaz, tels que l'hélium et l'hydrogène.

### Divulgation de l'invention

A cet effet, il est proposé l'utilisation de charges lamellaires, dans une composition comprenant au moins un élastomère, entre 50 et 100 parts en poids d'un mélange de noir de carbone, de silice et d'organosilane, et entre 5 et 60 parts en poids desdites charges lamellaires pour 100 parts en poids dudit élastomère pour réaliser un joint présentant une perméabilité au gaz hélium ou hydrogène inférieur à 5.10⁻¹⁷m²Pa⁻¹s⁻¹ et susceptible d'être utilisé notamment dans une pièce d'horlogerie.

La présente invention concerne également une pièce d'horlogerie comprenant un joint présentant une perméabilité au gaz hélium ou hydrogène inférieur à 5.10⁻¹⁷m²Pa⁻¹s⁻¹, ledit joint comportant au moins un élastomère, entre 50 et 100 parts en poids d'un mélange de noir de carbone, de silice et d'organosilane, et entre 5 et 60 parts en poids de charges lamellaires, pour 100 parts en poids dudit élastomère.

### Mode(s) de réalisation de l'invention

Le joint utilisé dans l'invention présente une perméabilité au gaz hélium ou hydrogène inférieur à 5.10⁻¹⁷m²Pa⁻¹s⁻¹ et comprend au moins un élastomère, entre 50 et 100 parts en poids, de préférence entre 80 et 100 parts en poids d'un mélange de noir de carbone, de silice et d'organosilane, et entre 5 et 60 parts en poids, de préférence entre 10 et 50 parts en poids de charges lamellaires, pour 100 parts en poids dudit élastomère.

De préférence, l'élastomère est choisi parmi le groupe comprenant les élastomères nitriles et les fluoroélastomères. Les élastomères nitriles comprennent les élastomères copolymères butadiène-acrylonitrile (NBR) ainsi que les élastomères copolymères butadiène-acrylonitrile hydrogéné (HNBR).

Dans la présente invention, le terme « fluoroélastomères » est utilisé au sens général indépendamment de la teneur en fluor et désigne à la fois les élastomères fluorés dont la chaine principale est partiellement substituée, c'est-à-dire les fluoroélastomères communément appelés FKM, ainsi que les élastomères fluorés dont la chaine principale est entièrement substituée, c'est-à-dire les perfluoroélastomères communément appelés FFKM.

De préférence, l'élastomère est un élastomère nitrile NBR.

Les élastomères peuvent être utilisés seuls ou en mélange avec d'autres élastomères appropriés.

De préférence, le mélange de noir de carbone, de silice et d'organosilane peut comprendre entre 15 et 80 parts en poids de noir de carbone, entre 15 et 80 parts en poids de silice et entre 0,5 et 5 parts en poids d'organosilane pour 100 parts en poids dudit mélange.

De préférence, le mélange de noir de carbone, de silice et d'organosilane peut comprendre entre 40 et 60 parts de noir de carbone, entre 30 et 60 parts de silice, de préférence entre 30 et 45 parts de silice, et entre 1 et 3 parts d'organosilane pour 100 parts en poids dudit mélange.

On peut utiliser un seul noir de carbone ou un coupage de plusieurs noirs de carbone de grades ASTM différents (à faible ou haute structure, à faible ou haute surface spécifique).

De préférence, la silice utilisée peut être toute silice renforçante connue de l'homme du métier, notamment toute silice précipitée amorphe. De préférence, ces silices présentent une surface BET ainsi qu'une surface spécifique CTAB toutes deux inférieures à 400 m²g⁻¹, de préférence inférieures à 200 m²g⁻¹, et plus préférentiellement inférieures à 130 m²g⁻¹.

D'une manière avantageuse, l'organosilane est au moins bifonctionnel et comprend un groupe fonctionnel capable de former des liaisons covalentes avec les groupes fonctionnels d'au moins l'un des composants de la composition, en particulier l'élastomère et/ou les charges.

Le groupe fonctionnel capable de former des liaisons covalentes avec les groupes fonctionnels d'au moins l'un des composants de la composition peut être un hydroxyalkyle, un aminoalkyle, un polyaminoalkyle, un époxyalkyle, notamment un glycidylalkyle, un halogénoalkyle, un mercaptoalkyle, un alkylsulfure ou un alkylpolysulfure pouvant contenir un atome de silicium, un azidoalkyle, un radical cyclique ou acyclique comportant au moins une double liaison, tel que radical vinyl.

Des exemples des organosilanes qui peuvent être utilisés sont le 3-aminopropyl-triéthoxysilane, le vinyltriméthoxysilane, le vinyltriéthoxysilane, le 3-glycidoxypropyl-triméthoxysilane, le 3-mercaptopropyl-triméthoxysilane, le N-béta-aminoéthyl-3-aminopropyl-triméthoxysilane, le 3-aminopropyl-triméthoxysilane, le 3-aminoéthyl-triéthoxysilane, le 3-glycidoxyéthyl-triéthoxysilane, le 3-mercaptopropyl- triéthoxysilane, le N-béta-aminoéthyl-3-aminoéthyl-triméthoxysilane, le 3-aminobutyl- triéthoxysilane, le 3-aminoéthyl-triméthoxysilane, le 3-aminopropyl-méthyl-diéthoxysilane, le bis-[γ-(triéthoxysilyl)-propyl-tetrasulfate, 3-mercaptopropyl triméthoxysilane, le tétrasulfure de bis triéthoxy silylpropyle, le tétrasulfure de bis triméthoxy silylpropyle, le p-(triméthoxysilyl)benzyl diazoacétate, le 4-(triméthoxysilyl)cyclohexylsulfonyl azidure, le 6-(triméthoxysilyl)hexylsulfonyl azidure.

Les organosilanes préférés sont le vinyltriméthoxysilane, et le bis-[γ-(triéthoxysilyl)-propyl-tetrasulfate, 3-mercaptopropyl triméthoxysilane.

On peut utiliser un seul organosilane ou un mélange d'organosilanes.

D'une manière avantageuse, les charges lamellaires sont des particules de phyllosilicates. De préférence, les particules de phyllosilicates sont choisies parmi le groupe comprenant, le kaolin, le talc, les montmorillonites et leurs mélanges.

De préférence, les charges lamellaires sont des nanoparticules.

Par ailleurs, les charges lamellaires peuvent être fonctionnalisées avec des silanes de manière à améliorer leur incorporation et leur liaison avec la matrice élastomère. Les montmorillonites peuvent être des montmorillonites naturelles ou naturelles modifiée, par exemple avec un sel d'ammonium quaternaire.

D'une manière avantageuse, le joint présentant une perméabilité au gaz hélium ou hydrogène inférieur à 5.10⁻¹⁷m²Pa⁻¹s⁻¹ utilisé dans l'invention peut être obtenu à partir d'une composition comprenant d'autres charges, renforçantes ou non, des agents de vulcanisation propres à l'élastomère, et autres additifs traditionnels communément utilisés par l'homme du métier dans le domaine des formulations à base d'élastomère, et plus particulièrement des formulations à base de nitrile ou de fluoroélastomère.

Plus particulièrement, le joint présentant une perméabilité au gaz hélium ou hydrogène inférieur à 5.10⁻¹⁷m²Pa⁻¹s⁻¹ peut comprendre en outre entre 5 et 20 parts, de préférence entre 8 et 15 parts en poids de plastifiant pour 100 parts en poids dudit élastomère. Un tel plastifiant est par exemple une huile ou un polymère.

En outre, le joint présentant une perméabilité au gaz hélium ou hydrogène inférieur à 5.10⁻¹⁷m²Pa⁻¹s⁻¹ peut comprendre entre 1 et 10 parts, de préférence entre 2 et 5 parts en poids d'agent de réticulation ou de vulcanisation pour 100 parts en poids dudit élastomère. De tels agents sont par exemple l'oxyde de zinc ou l'acide stéarique.

Le joint présentant une perméabilité au gaz hélium ou hydrogène inférieur à 5.10⁻¹⁷m²Pa⁻¹s⁻¹ utilisé dans l'invention est obtenu par un procédé comprenant les étapes suivantes :
a) mélangeage d'une composition comprenant l'élastomère, le mélange de noir de carbone, de silice, d'organosilane, et de charges lamellaires,
b) addition à la composition d'autres réactifs, tels que plastifiants, agents de réticulation ou vulcanisation,
c) mélangeage de la composition à une température inférieure à 150°C, de préférence inférieure à 140°C,
d) moulage de la composition obtenue à l'étape c) sous la forme d'un joint, et
e) cuisson du joint.

Le moulage peut se faire par tout procédé connu, tel qu'en injection ou en compression. La vulcanisation (ou cuisson) est conduite de manière connue à une température généralement comprise entre 130°C et 200°C, pendant un temps suffisant qui peut varier par exemple entre 60 secondes et 20 minutes en fonction notamment de la température de cuisson, du système de vulcanisation adopté et de la cinétique de vulcanisation de la composition du joint.

Le joint obtenu peut être un joint O'ring, X'ring, ou présentant toute autre géométrie complexe.

Le joint selon l'invention possède une très faible perméabilité à l'hélium, cette propriété pouvant être étendue à l'hydrogène. La perméabilité est inférieure à 5.10⁻¹⁷m²Pa⁻¹s⁻¹, selon la norme NF ISO 2782. Il peut donc être utilisé dans les pièces d'horlogerie, et plus particulièrement, pour les montres de plongée sous-marine ou les montres dans lesquelles ces gaz sont utilisés, mais également dans les pièces électroniques dans lesquelles des joints imperméables à l'hélium et à l'hydrogène sont recherchés.

De plus, le joint présentant une perméabilité au gaz hélium ou hydrogène inférieur à 5.10⁻¹⁷m²Pa⁻¹s⁻¹ utilisé dans l'invention répond au cahier des charges spécifique du domaine de l'horlogerie, tel que fluage faible, tribologie spécifique afin d'éviter l'utilisation de lubrifiant, résistance aux huiles, déformation rémanente sous contrainte (DRC) la plus faible possible, tout en atteignant un module à 100% et un allongement à la rupture optimal adéquats.

### Exemples :

Des joints présentant une perméabilité au gaz hélium ou hydrogène inférieur à 5.10⁻¹⁷m²Pa⁻¹s⁻¹ ont été fabriqués avec un élastomère NBR et un mélange de silice (amorphe précipitée), de silane (3-mercaptopropyltriméthoxysilane), de noir de carbone N990MT et de différentes charges lamellaires. Les différentes charges lamellaires utilisées sont un talc fonctionnalisé au silane, une montmorillonite naturelle modifiée avec un sel d'ammonium quaternaire mélangée à du kaolin.

A titre comparatif, un joint a été fabriqué sans charge lamellaire.

Le moulage en compression ou en injection est réalisé avec un temps de vulcanisation de 10 minutes à 180°C.

Les propriétés mécaniques suivantes sont mesurées :
- dureté Shore A (NF T 46-052)
- résistance à la rupture (NF T 46-002 TYPE H2)
- allongement à la rupture (NF T 46-002 TYPE H2)
- module 100% (NF T 46-002 TYPE H3)
- résistance au déchirement (NF T 46-033)
- déformation rémanente sous contrainte (DRC) (NF T 46-011)
- perméabilité à l'hélium (NF ISO 2782).

Pour la perméabilité à l'hélium, les tests sont réalisés sous 4 bars à 29°C, le volume de la chambre de mesure étant de 3,3 cm³, la surface de contact avec le gaz étant de 15,2 cm².

Les résultats figurent dans le tableau ci-dessous :

| | Ex 1 (comp.) | Ex 2 (inv.) | Ex 3 (inv.) | Ex 4 (inv.) | Ex 5 (inv.) |
|---|---|---|---|---|---|
| Charges lamellaires | - | Talc fonct. | Talc fonct. | Talc fonct. | Montmorillonite modifiée avec sel d'ammonium quaternaire + kaolin |
| Part charges lam./100 parts NBR | - | 30 | 33 | 50 | 10+20 |
| Dureté Shore A | 67.5 | 73 | 72 | 71 | 78 |
| Résistance rupture (MPa) | 14.6 | 17.1 | 14.8 | 12.7 | 17.3 |
| Allongement rupture (%) | 256 | 286 | 253 | 249 | 303 |
| Module 100% (MPa) | 3.61 | 6.96 | 6.78 | 6.42 | 6.21 |
| Résistance déchirement (N/mm) | 24.3 | 29.3 | 29.4 | 29.9 | 39.7 |
| DRC (4x2h)h à 100°C (%) | 8.4 | 7.79 | 8.61 | 7.61 | 9.26 |
| Perméabilité (m²Pa⁻¹s⁻¹) | 7.2.10⁻¹⁷ | 4.3.10⁻¹⁷ | 4.5.10⁻¹⁷ | 3.5.10⁻¹⁷ | 4.7.10⁻¹⁷ |

Les résultats obtenus montrent que l'ajout de charges lamellaires, conformément à l'invention, permet d'obtenir des joints présentant une perméabilité à l'hélium inférieure à celle du joint comparatif en NBR sans charges lamellaires.

Par ailleurs, l'ajout de charges lamellaires ne diminue pas les propriétés mécaniques des joints. En effet, les résultats ci-dessus montrent que les joints selon l'invention répondent toujours parfaitement au cahier des charges. Notamment, la résistance au déchirement et le module 100% des joints selon l'invention sont meilleurs que ceux obtenus avec le joint comparatif. La résistance à la rupture des joints selon l'invention est comparable ou supérieure aux valeurs obtenues avec le joint comparatif. La déformation rémanente sous contrainte des joints selon l'invention est inférieure à 10% après 4 cycles de 2h à 100°C, conformément au cahier des charges.

## Revendications

1. Utilisation de charges lamellaires dans une composition d'un joint susceptible d'être utilisé notamment dans une pièce d'horlogerie, pour obtenir une perméabilité au gaz hélium ou hydrogène dudit joint inférieure à 5.10⁻¹⁷m²Pa⁻¹s⁻¹, ledit joint comportant au moins un élastomère, entre 50 et 100 parts en poids d'un mélange de noir de carbone, de silice et d'organosilane, et entre 5 et 60 parts en poids de charges lamellaires, pour 100 parts en poids dudit élastomère.

2. Utilisation de charges lamellaires selon la revendication 1, **caractérisée en ce que** les charges lamellaires sont des particules de phyllosilicates.

3. Utilisation de charges lamellaires selon la revendication 2, **caractérisée en ce que** les particules de phyllosilicates sont choisies parmi le groupe comprenant, le kaolin, le talc, les montmorillonites et leurs mélanges.

4. Utilisation de charges lamellaires selon l'une quelconque des revendications précédentes, **caractérisée en ce que** l'élastomère est choisi parmi le groupe comprenant les élastomères nitriles et les fluoroélastomères.

5. Utilisation de charges lamellaires selon l'une quelconque des revendications précédentes, **caractérisée en ce que** le mélange de noir de carbone, de silice et d'organosilane comprend entre 15 et 80 parts en poids de noir de carbone, entre 15 et 80 parts en poids de silice et entre 0,5 et 5 parts en poids d'organosilane pour 100 parts en poids dudit mélange.

6. Utilisation de charges lamellaires selon l'une quelconque des revendications précédentes, **caractérisée en ce que** ledit mélange comprend un coupage de plusieurs noirs de carbone de grades ASTM différents.

7. Utilisation de charges lamellaires selon l'une quelconque des revendications précédentes, **caractérisée en ce qu'**il comprend en outre entre 5 et 20 parts en poids de plastifiant pour 100 parts en poids dudit élastomère.

8. Utilisation de charges lamellaires selon l'une quelconque des revendications précédentes, **caractérisé en ce qu'**il comprend en outre entre 1 et 10 parts en poids d'agent de réticulation pour 100 parts en poids dudit élastomère.

9. Pièce d'horlogerie comprenant un joint présentant une perméabilité au gaz hélium ou hydrogène inférieure à 5.10⁻¹⁷m²Pa⁻¹s⁻¹, ledit joint comportant au moins un élastomère, entre 50 et 100 parts en poids d'un mélange de noir de carbone, de silice et d'organosilane, et entre 5 et 60 parts en poids de charges lamellaires, pour 100 parts en poids dudit élastomère.

## Patentansprüche

1. Verwendung lamellarer Chargen in der Zusammensetzung einer Dichtung, die für eine Verwendung insbesondere in einer Uhr bestimmt ist, um eine Durchlässigkeit für Helium- oder Wasserstoffgas der Dichtung unter 5,10⁻¹⁷m²Pa⁻¹s⁻¹ zu erhalten, wobei die Dichtung mindestens ein Elastomer, zwischen 50 und 100 Gewichtsanteile eines Gemischs aus Karbonschwarz, Kieselsäure und Organosilan, und zwischen 5 und 60 Gewichtsanteile lamellarer Chargen auf 100 Gewichtsanteile des Elastomers aufweist.

2. Verwendung lamellarer Chargen nach Anspruch 1, **dadurch gekennzeichnet, dass** die lamellaren Chargen Phyllosilikatpartikel sind.

3. Verwendung lamellarer Chargen nach Anspruch 2, **dadurch gekennzeichnet, dass** die Phyllosilikatpartikel aus der Gruppe ausgewählt sind, die das Kaolin, den Talk, die Montmorillonite und ihre Gemische umfasst.

4. Verwendung lamellarer Chargen nach einem der vorangehenden Ansprüche, **dadurch gekennzeichnet, dass** das Elastomer aus der Gruppe ausgewählt ist, die die Nitrilelastomere und die Fluorelastomere umfasst.

5. Verwendung lamellarer Chargen nach einem der vorangehenden Ansprüche, **dadurch gekennzeichnet, dass** das Gemisch aus Karbonschwarz, Kieselsäure und Organosilan zwischen 15 und 80 Gewichtsanteile Karbonschwarz, zwischen 15 und 80 Gewichtsanteile Kieselsäure und zwischen 0,5 und 5 Gewichtsanteile Organosilan auf 100 Gewichtsanteile des Gemischs umfasst.

6. Verwendung lamellarer Chargen nach einem der vorangehenden Ansprüche, **dadurch gekennzeichnet, dass** das Gemisch einen Verschnitt aus mehreren Karbonschwarzen unterschiedlicher ASTM-Grade umfasst.

7. Verwendung lamellarer Chargen nach einem der vorangehenden Ansprüche, **dadurch gekennzeichnet, dass** es ferner zwischen 5 und 20 Gewichtsanteile Weichmacher auf 100 Gewichtsanteile des Elastomers umfasst.

8. Verwendung lamellarer Chargen nach einem der vorangehenden Ansprüche, **dadurch gekennzeichnet, dass** es ferner zwischen 1 und 10 Gewichtsanteile eines Vernetzungsmittels auf 100 Gewichtsanteile des Elastomers umfasst.

9. Uhr, die eine Dichtung umfasst, die eine Durchlässigkeit für Helium- oder Wasserstoffgas unter 5,10⁻¹m²Pa⁻¹s⁻¹ aufweist, wobei die Dichtung mindestens ein Elastomer, zwischen 50 und 100 Gewichtsanteile eines Gemischs aus Karbonschwarz, Kieselsäure und Organosilan und zwischen 5 und 60 Gewichtsanteile lamellarer Chargen auf 100 Gewichtsanteile des Elastomers aufweist.

## Claims

1. The use of lamellar fillers in a composition of a seal which may notably be used in a timepiece, for obtaining a permeability to helium or hydrogen gas of said seal of less than 5.10⁻¹⁷m²Pa⁻¹s⁻¹, said seal including at least one elastomer, between 50 and 100 parts by weight of a mixture of carbon black, silica and organosilane, and between 50 and 60 parts by weight of lamellar fillers, 100 parts by weight of said elastomer.

2. The use of lamellar fillers according to claim 1, **characterized in that** the lamellar fillers are particles of phyllosilicates.

3. The use of lamellar fillers according to claim 2, **characterized in that** the phyllosilicate particles are selected from the group comprising kaolin, talcum, montmorillonites and mixtures thereof.

4. The use of lamellar fillers according to any of the preceding claims, **characterized in that** the elastomer is selected from the group comprising nitrile elastomers and the fluoroelastomers.

5. The use of lamellar fillers according to any of the preceding claims, **characterized in that** the mixture of carbon black, silica and organosilane comprises between 15 and 80 parts by weight of carbon black, between 15 and 80 parts by weight of silica, and between 0.5 and 5 parts by weight of organosilane for 100 parts by weight of said mixture.

6. The use of lamellar fillers according to any of the preceding claims, **characterized in that** said mixture comprises a blend of several carbon blacks of different ASTM grades.

7. The use of lamellar fillers according to any of the preceding claims, **characterized in that** it further comprises between 5 and 20 parts by weight of a plasticizer for 100 parts by weight of said elastomer.

8. The use of lamellar fillers according to any of the preceding claims, **characterized in that** it further comprises between 1 and 10 parts by weight of a cross-linking agent for 100 parts by weight of said elastomer.

9. A timepiece comprising a seal having a permeability to helium or hydrogen gas of less than 5.10⁻¹⁷m²Pa⁻¹s⁻¹, said seal including at least one elastomer, between 50 and 100 parts by weight of a mixture of carbon black, silica and organosilane, and between 5 and 60 parts by weight of lamellar fillers, for 100 parts by weight of said elastomer.
